# EUROPÄISCHE PATENTSCHRIFT

(11) **EP 1 656 292 B1**
(45) Veröffentlichungstag und Bekanntmachung des Hinweises auf die Patenterteilung: **02.01.2008**
(21) Anmeldenummer: 04764071.9
(22) Anmeldetag: 12.08.2004
(51) Int. Cl.: B62D 53/08

(54) **VERRIEGELUNGSVORRICHTUNG FÜR EINE SATTELKUPPLUNG**
LOCKING DEVICE FOR A FIFTH WHEEL COUPLING
DISPOSITIF DE VERROUILLAGE POUR ACCOUPLEMENT DE TRACTEUR

(30) Priorität: 14.08.2003 DE 10337816
(43) Veröffentlichungstag der Anmeldung: 17.05.2006
(73) Patentinhaber: Hunger, Walter, D-97074 Würzburg (DE)
(72) Erfinder: Hunger, Walter, D-97074 Würzburg (DE)
(74) Vertreter: Witte, Alexander
(86) Internationale Anmeldenummer: PCT/EP2004/009074
(87) Internationale Veröffentlichungsnummer: WO 2005/016726

(56) Entgegenhaltungen:
- CA-A- 2 339 758
- DE-A- 3 725 414
- DE-A- 4 030 095
- US-A- 4 572 537
- US-A- 4 928 987
- PATENT ABSTRACTS OF JAPAN Bd. 0072, Nr. 46 (M-253), 2. November 1983 (1983-11-02) & JP 58 133968 A (KYOKUTO KAIHATSU KOGYO KK; others: 01), 9. August 1983 (1983-08-09)
- PATENT ABSTRACTS OF JAPAN Bd. 0071, Nr. 02 (M-211), 30. April 1983 (1983-04-30) & JP 58 022773 A (KYOKUTO KAIHATSU KOGYO KK), 10. Februar 1983 (1983-02-10)
- PATENT ABSTRACTS OF JAPAN Bd. 0071, Nr. 02 (M-211), 30. April 1983 (1983-04-30) & JP 58 022771 A (KYOKUTO KAIHATSU KOGYO KK), 10. Februar 1983 (1983-02-10)

## Beschreibung

Die Erfindung betrifft eine Sattelkupplung mit zwei Schließbacken, die in einer geschlossenen Stellung eine Ausnehmung zum Aufnehmen eines Königszapfens bilden und die mit ersten Führungsflächen versehen sind, und mit einer Verriegelungsvorrichtung zum Zusammenhalten der Schließbacken in mehreren geschlossenen Stellungen, in denen diese im Bereich der Ausnehmung jeweils unterschiedlich beabstandet sind, wobei die Verriegelungsvorrichtung mindestens ein Verriegelungselement aufweist, das mit zweiten Führungsflächen versehen ist, die an den ersten Führungsflächen anliegen und mit diesen zusammen ein Kurvengetriebe bilden, derart, dass die Verriegelungsvorrichtung ein kontinuierliches Einstellen des Abstandes im Bereich der Ausnehmung ermöglicht, wobei ferner das Verriegelungselement linear verfahrbar ist und die zweiten Führungsflächen im Wesentlichen U-förmig oder V-förmig an dem Verriegelungselement ausgebildet sind.

Eine Sattelkupplung der vorstehend genannten Art ist aus dem Dokument PATENT ABSTRACTS OF JAPAN, Bd. 0072, Nr. 46 (M-253), 2. November 1983 bzw. dem Dokument JP 058 133968 bekannt.

Sattelkupplungen werden zur gelenkigen Verbindung einer Sattelzugmaschine (z.B. eines LKWs) mit einem Sattelanhänger verwendet. Die Sattelkupplung weist eine auf der Sattelzugmaschine über Lagerelemente gehalterte Sattelkupplungsplatte auf. Die Sattelkupplungsplatte ist mit einem Ausschnitt mit einer zentralen Ausnehmung und mit einem Schloss versehen. Dieses dient zur verriegelbaren Aufnahme eines Königszapfens, der am Sattelanhänger in der Mitte einer Aufliegerplatte fest angebracht ist.

Sattelkupplungen dienen daher zum formschlüssigen, jedoch schwenkbaren Vereinden der Sattelzugmaschine mit dem Sattelanhänger, auch Sattelauflieger genannt, die dann zusammen einen so genannten Sattelzug bilden. Die Sattelkupplungsplatte hat typischerweise einen V-förmigen oder maulartigen Einführausschnitt, auch Kupplungs- oder Fangmaul genannt, der beidseitig von je einem etwas nach unten geneigten Horn begrenzt wird. Ein V-förmiger Einschnitt ist typisch, aber nicht zwingend. Es kann auch ein Koppeln von oben in den Ausschnitt erfolgen.

Der Einführausschnitt mündet in eine zentrale Ausnehmung ein, in der üblicherweise ein Verschleißring angebracht ist. Beidseitig des Verschleißringes befinden sich Schlossteile, insbesondere ein Verschlusshaken, die bei geöffneter Sattelkupplung mit der zentralen Ausnehmung nicht in Eingriff sind. Die Sattelkupplungsplatte ist über Lagerblöcke und ggf. eine Montageplatte mit dem Rahmen der Sattelzugmaschine verbunden.

Beim Kuppeln wird der Königszapfen, geführt durch das Kupplungsmaul in der Sattelkupplungsplatte, in deren zentrale Ausnehmung eingeschoben, bis er am Verschleißring anschlägt. Die Aufliegerplatte bildet dabei die Gegenplatte zur Sattelkupplungsplatte. Sobald der Königszapfen am Verschleißring anliegt, werden die Schlossteile in Schließstellung gebracht, wobei der Verschlusshaken den Königszapfen formschlüssig, jedoch drehbeweglich, umfasst.

Sattelkupplungen der vorstehenden Art sind allgemein bekannt und werden in großem Umfang standardmäßig (DIN 74080 = ISO 337) bei Sattelzügen eingesetzt.

Das Dokument DE 37 25 414 C2 beschreibt einen Königszapfen des Sattelaufliegers, der von einer Verriegelungsvorrichtung des Zugfahrzeugs gehalten wird. Deren Schließelemente sind zwei symmetrische, schwenkbar angelenkte Schließbacken, die jeweils eine Halbkreisausnehmung zum Erfassen des Königszapfens aufweisen und die z.B. durch einen Hydraulikzylinder zwischen einer den Königszapfen freigebenden Öffnungsstellung und einer den Königszapfen erfassenden Verriegelungsstellung hin und her schwenkbar sind. Bei der in dem Dokument DE 37 25 414 C2 gezeigten Ausbildung sind die Berührungsflächen zwischen den Schließbacken und dem Königszapfen so groß, dass dort nur relativ geringe Flächenpressungen auftreten.

Die großflächige Berührung zwischen Schließbacken und Königszapfen bildet ein Gleitlager für den Königszapfen, wobei jedoch die sich in der geschlossenen Stellung der Schließbacken zu einer Lagerschale zusammenfügenden Halbkreisausnehmungen der Schließbacken ein gewisses Spiel gegenüber dem Königszapfen behalten müssen. Außerdem kann, insbesondere beim Aufsatteln, leicht Schmutz auf die gegeneinander gleitenden Flächen gelangen, was dann zu einem gewissen Verschleiß führen kann.

Wenn der Königszapfen noch neu und unverschlissen ist, wird er im geschlossenen Zustand der Lagerschalen dicht umfasst. Mit zunehmendem Verschleiß des Königszapfens hat dieser jedoch in der geschlossenen Stellung der Schließbacken mehr und mehr Spiel und kann daher schlagen.

Aus dem Dokument DE 40 30 095 C2 ist eine Zweischeiben-Sattelkupplung bekannt. Diese Sattelkupplung ist mit einer Blockierung der Schließbacken versehen, wenn sich der Königszapfen zwischen den Schließbacken in der Kuppelstellung befindet. Die Blockierung ermöglicht dabei eine permanente Nachstellung, um den Verschleiß des Königszapfens zu kompensieren oder um mit Königszapfen mit unterschiedlichem Durchmesser fahren zu können. Zu diesem Zweck sind die Schließbacken mit bogenförmigen, erhabenen Segmenten versehen. Deren kreisbogenförmige Anlageflächen haben einen Mittelpunkt, der bei der einen Schließbacke in der Draufsicht etwas unterhalb und bei der anderen Schließbacke etwas oberhalb der Schwenkachse der Schließbacken liegt. In dieser Schwenkachse ist ein Blockierstück drehbar gelagert, das mit zwei Flügeln versehen ist. Die Flügel liegen mit ihren äußeren Blockierflächen an den Anlageflächen an. Das Blockierstück wird mittels eines Zughebels verschwenkt, der zu diesem Zweck entweder manuell oder mit Hilfe eines Pneumatikzylinders linear verfahrbar ist. Die auf diese Weise einstellbare Drehlage des Blockierstücks definiert eine Blockierstellung der Schließbacken in mehr oder weniger geschlossenem Zustand.

Diese bekannte Sattelkupplung hat den Nachteil, dass der Bewegungsablauf sehr kompliziert ist und dass infolge der aneinander ablaufenden Kreisbögen ein unerwünschtes Verklemmen der Anordnung auftreten kann, das ein Lösen der Sattelkupplung verhindert oder zumindest erschwert. Das kann insbesondere bei servomechanischer Betätigung der Sattelkupplung auch zu Beschädigungen führen.

Das eingangs genannte Dokument PATENT ABSTRACTS OF JAPAN, Bd. 0072, Nr. 46 (M-253), 2. November 1983 bzw. JP 058 133968 beschreibt eine Nachstellungsvorrichtung für die Schließbacken einer Sattelkupplung, bei der ein vorne V-förmiges Element auf der vom Königszapfen und den Schwenkachsen der Schließbacken abgewandten Seite an entsprechenden Führungsflächen der Schließbacken angreift. Die Nachstellung wird dabei dadurch bewirkt, dass eine Mutter auf einem Gewinde verdreht wird, wobei das Gewinde Teil einer Schubstange für das keilförmige Element ist. Ein Benutzer der Vorrichtung muss zunächst überprüfen, ob ein Nachstellen erforderlich ist. Er muss dann manuell die Nachstellung durch Verdrehen der Mutter bewirken, wobei es seiner Erfahrung vorbehalten bleibt, ob er das keilförmige Element tatsächlich so weit nachstellt, wie dies gerade dem mittlerweile aufgetretenen Abrieb am Königszapfen oder an den Schließbacken entspricht.

Der Erfindung liegt demgegenüber die Aufgabe zugrunde, eine Sattelkupplung der eingangs genannten Art dahingehend weiterzubilden, dass die vorstehend genannten Probleme vermieden werden. Insbesondere soll eine Sattelkupplung geschaffen werden, die bei einfachem Bewegungsablauf leicht und sicher geöffnet und geschlossen werden kann und die trotzdem ein Nach- bzw. Einstellen der Schließstellung der Schließbacken ermöglicht.

Diese Aufgabe wird bei einer Sattelkupplung der eingangs genannten Art erfindungsgemäß dadurch gelöst, dass die Verriegelungsvorrichtung den Abstand im Bereich der Ausnehmung selbsttätig so einstellt, dass der jeweils aufgenommene Königszapfen spielfrei in der Ausnehmung gehalten wird, dass das Verriegelungselement hydraulisch verstellbar ist, dass die ersten Führungsflächen an Verriegelungsnasen vorgesehen sind, die sich an freien Enden der Schließbacken befinden, dass die ersten Führungsflächen zu einer Mittelachse der Sattelkupplung geneigt sind, und dass ein Hydraulikzylinder das Verriegelungselement mit den eine im Wesentlichen V-förmige Ausnehmung bildenden zweiten Führungsflächen von der den freien Enden abgewandten Seite her auf die Verriegelungsnasen zu bzw. von diesen weg bewegt.

Die der Erfindung zugrunde liegende Aufgabe wird auf diese Weise vollkommen gelöst.

Die Erfindung ermöglicht eine selbsttätige Nachstellung der Schließbacken, was zur Folge hat, dass der Königszapfen stets spielfrei in der Ausnehmung der Schließbacken gehalten wird.

Durch die besondere Ausbildung der Verriegelungsvorrichtung wird gewährleistet, dass Königszapfen, deren Durchmesser aufgrund von Verschleiß abnimmt, selbsttätig spielfrei und insbesondere formschlüssig von den Schließbacken gehalten werden können. Die Verschleißgeschwindigkeit wird so verringert, was die Lebensdauer einer so ausgebildeten Sattelkupplung erhöht.

Gemäß einer Ausführungsform ist das Verriegelungselement einstückig ausgebildet, vorzugsweise einstückig an die Schließbacken angeformt.

Dies hat den Vorteil, dass das Verriegelungselement günstig, schnell und einfach herzustellen ist. Beispielsweise könnte das Verriegelungseleinent aus Stahl gegossen werden. Andere Materialien und Fertigungsverfahren sind möglich.

Das Kurvengetriebe kann ein Keilgetriebe mit geraden Führungsflächen sein.

Gerade Führungsflächen sind fertigungstechnisch einfach herzustellen.

Die Führungsflächen können aber auch rund ausgebildet sein, was fertigungstechnisch ebenfalls einfach herzustellen ist. Hierzu ist bevorzugt, wenn das Verriegelungselement eine kreisförmige oder elliptische Ausnehmung aufweist.

Ferner kann das Kurvengetriebe Rollen aufweisen, die durch gerade oder runde Führungsflächen geführt werden.

Durch das Vorsehen von Rollen zwischen den Führungsflächen wird der Verschleiß der Verriegelungsvorrichtung minimiert, was die Lebensdauer erhöht. Das Bewegen der Führungsflächen gegeneinander wird aufgrund geringerer Reibung einfacher.

Ferner ist es bevorzugt, wenn die Schließbacken um eine Achse verschwenkbar sind.

Gemäß einer weiteren Ausführungsform sind die Schließbacke linear verfahrbar.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine Sattelkupplung nach dem Stand der Technik mit zwei Sattelbacken und zwei Schließbacken in einer geschlossenen Stellung;
- Fig. 2: die Sattelkupplung der Fig. 1 in einer geöffneten Stellung;
- Fig. 3: eine Verriegelungsvorrichtung gemäß einer Ausführungsform der vorliegenden Erfindung in einer vollständig geschlossenen Stellung;
- Fig. 4: die Verriegelungsvorrichtung der Fig. 3 in einer ersten geschlossenen Stellung;
- Fig. 5: die Verriegelungsvorrichtung der Fig. 3 in einer zweiten geschlossenen Stellung;
- Fig. 6: eine weitere Ausführungsform einer Verriegelungsvorrichtung gemäß der vorliegenden Erfindung in einer vollständig geschlossenen Stellung;
- Fig. 7: ein Verriegelungselement mit einer halbkreisförmigen Ausnehmung;
- Fig. 8: ein Verriegelungselement mit einer ellipsenförmigen Ausnehmung;
- Fig. 9: eine weitere Ausführungsform der Verriegelungsvorrichtung gemäß der vorliegenden Erfindung; und
- Fig. 10: eine erfindungsgemäße Sattelkupplung.

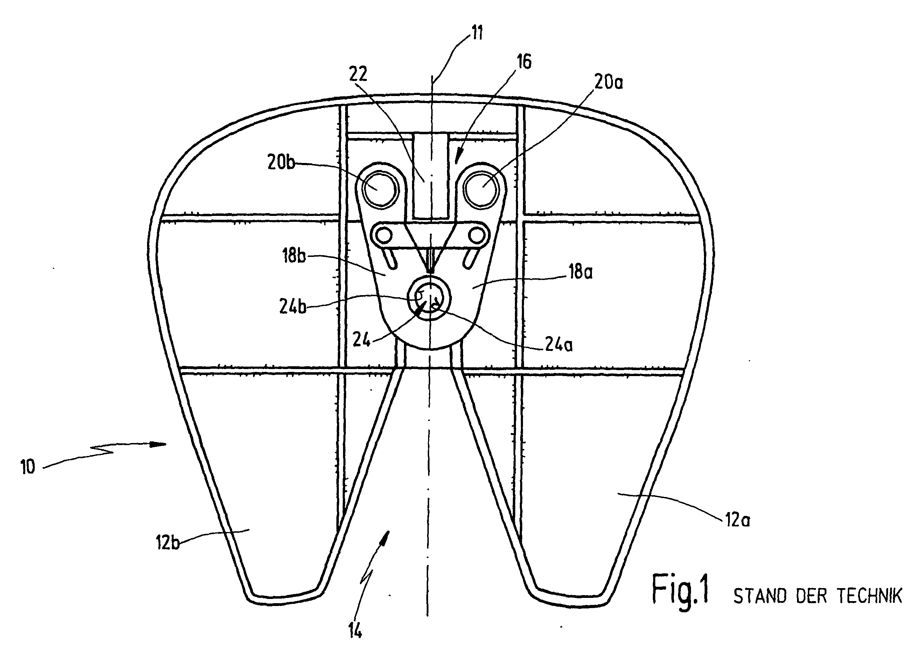

In Fig. 1 ist eine Sattelkupplung nach dem Stand der Technik dargestellt, die in ihrer Gesamtheit mit der Bezugsziffer 10 bezeichnet ist. In der Fig. 1 blickt man auf die Unterseite der Sattelkupplung 10.

Die Sattelkupplung 10 weist eine Kupplungsplatte mit zwei zu einer Mittelachse 11 symmetrischen Sattelbacken 12a und 12b auf. Die Sattelbacken 12a und 12b bilden eine Ausnehmung 14 zum Einführen eines Königszapfens (nicht dargestellt) eines Sattelanhängers bzw. Sattelaufliegers. Des Weiteren ist eine Verriegelungsmechanik 16 vorgesehen, die hier im Wesentlichen aus zwei symmetrisch zur Mittelachse 11 angeordneten Schließbacken 18a und 18b, die mittels Gelenkbolzen 20a und 20b schwenkbar an den Sattelbacken 12 angebracht sind, und einem sie betätigenden Hydraulikzylinder 22 besteht.

In den in der Fig. 1 nach unten weisenden Enden der Schließbacken 18 ist je eine halbkreisförmige Ausnehmung 24a bzw. 24b ausgebildet, die sich, wie in Fig. 1 gezeigt, in vollständig geschlossener Stellung der Schließbacken 18 zu einer kreisförmigen Ausnehmung 24 ergänzen, in der der Königszapfen formschlüssig umfasst und damit verriegelt werden kann.

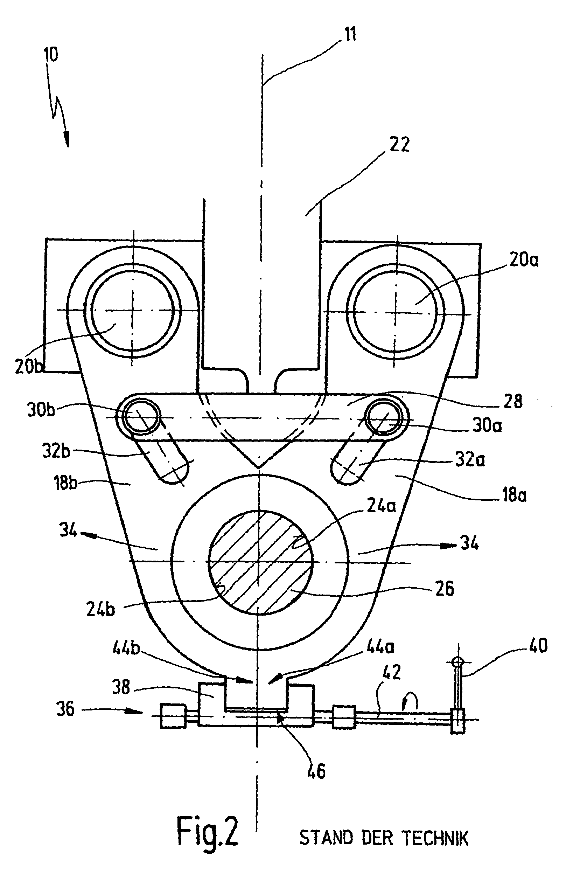

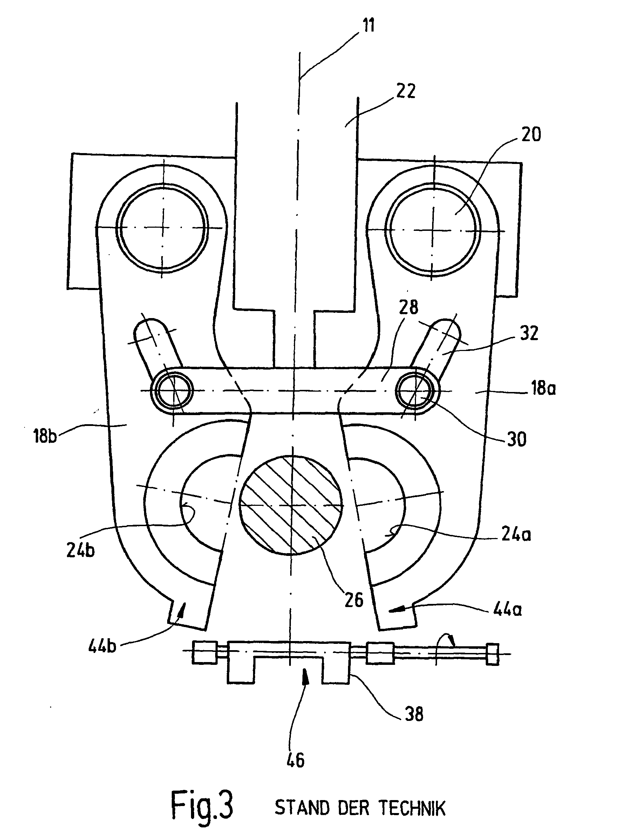

In Fig. 2 und 3 ist ein vergrößerter Ausschnitt der Sattelkupplung 10 mit einem Königszapfen 26 dargestellt, der von den Schließbacken 18 in der vollständig geschlossenen Stellung entlang seines gesamten Umfangs vollflächig umfasst wird, so dass die im Betrieb wirkenden Flächenpressungen relativ klein bleiben.

Der Hydraulikzylinder 22 ist an seinem in Fig. 2 unteren Ende mit einer Querstange 28 verbunden, an deren Enden Gleitvorsprünge 30a und 30b befestigt sind, die in schräg zur Mittelachse 11 verlaufenden Gleitnuten 32a und 32b der Schließbacken 18 geführt sind. Diese sind derart ausgerichtet, dass beim Ausfahren des Hydraulikyzylinders 22 (in der Fig. 2 nach unten) die Schließbacken 18 sich öffnen und, umgekehrt, beim Einfahren sich schließen. Die Öffnungsrichtung der Schließbacken 18 ist jeweils durch einen Pfeil 34 in der Fig. 2 angedeutet.

Fig. 2 zeigt die vollständig geschlossene Verriegelungsstellung und Fig. 3 eine offene, nicht geschlossene und nicht verriegelte Freigabestellung, in der der Königszapfen 26 freigegeben ist und der Sattelauflieger weg- bzw. herangefahren werden kann.

Zur Sicherung der vollständig geschlossenen Stellung ist am hinteren Ende der Schließbacken 18 eine mechanische Verriegelungsvorrichtung 36 vorgesehen, die im Wesentlichen aus einem U-förmigen Verriegelungselement 38 besteht, das auf einer mittels eines Schwenkhebels 40 drehbaren Schwenkachse 42 befestigt ist und in seiner Riegelstellung zwei hintere Verriegelungszapfen bzw. -nasen 44a und 44b zusammenhält. Die Verriegelungszapfen 44 sind mit den Schließbacken 18 mechanisch gekoppelt, vorzugsweise einstückig mit diesen ausgebildet. Unter einer Riegelstellung ist zu verstehen, dass die Schließbacken 18 den Königszapfen 26 umfassen, ihn halten und sich nicht öffnen lassen. Das Verriegelungselement 38 weist eine Ausnehmung 46 auf, in die die Verriegelungszapfen 44 formschlüssig eingreifen.

In der Fig. 3 ist, wie bereits oben erwähnt, eine geöffnete Stellung der Sattelkupplung 10 bzw. der Schließbacken 18 dargestellt. Um die Schließbacken 18 aus der Stellung der Fig. 2 in die Stellung der Fig. 3 zu bewegen, werden die Schließbacken 18 mittels des Hydraulikzylinders 22, der mit der Querstange 28, den Gleitvorsprüngen 30 und den Gleitnuten 32 zusammenwirkt, ausgefahren. Dazu muss jedoch zunächst das Verriegelungselement 38 durch Drehen um die Schwenkachse 42 in eine solche Stellung gebracht werden, die es erlaubt, die Schließbacken 18 zu öffnen. Diese Position ist in der Fig. 3 dargestellt. Das Verriegelungselement 38 ist dabei in der Darstellung der Fig. 3 nach unten offen.

Durch die Form der Ausnehmung 46 sind nur zwei Zustände des Verriegelungselements 38 relativ zu den Verriegelungszapfen 44 möglich, nämlich die vollständig geschlossene Stellung (vgl. Fig. 2), bei der die Zapfen 44 formschlüssig in die Ausnehmung 46 eingreifen, und eine vollständig geöffnete Stellung (vgl. Fig. 3), bei der die Zapfen 44 nicht eingreifen.

Das wiederum hat jedoch zur Folge, dass, wenn ein Königszapfen infolge von Verschleiß einen kleineren Durchmesser aufweist als der in Fig. 2 gezeigte Königszapfen 26, die Schließbacken 18 diesen dünneren Königszapfen in der vollständig geschlossenen Stellung nicht vollflächig umschließen können, da der dünnere Königszapfen in der Ausnehmung 24 radiales Spiel hat. Dies führt in Betrieb des Sattelzuges zu starken Wechselbeanspruchungen des Königszapfens und daher zu einem überproportional ansteigendem Verschleiß.

Erfindungsgemäß wird daher die vorstehend beschriebene Anordnung so modifiziert, dass die mechanische Verriegelungsvorrichtung sich an unterschiedliche Durchmesser des Königzapfens anpassen kann.

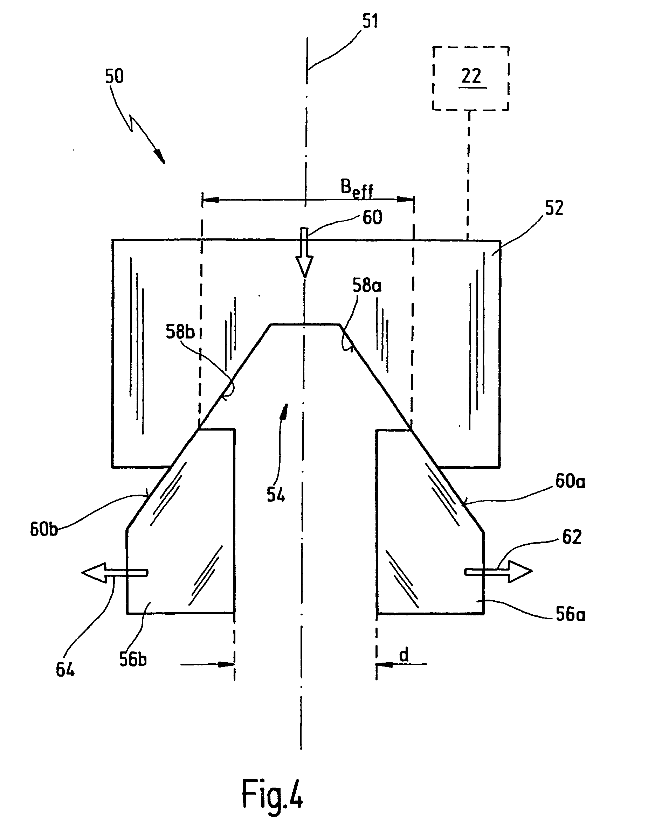

In Fig. 4 ist eine erste Ausführungsform einer Verriegelungsvorrichtung gemäß der vorliegenden Erfindung schematisch dargestellt, die mit der Bezugsziffer 50 bezeichnet ist. Dabei ist eine erste geschlossene Stellung gezeigt, bei der ein Königszapfen (nicht dargestellt) in der Riegelstellung gehalten wird.

Die Verriegelungsvorrichtung 50 umfasst ein entlang einer Mittelachse 51 verfahrbares Verriegelungselement 52, das eine Ausnehmung 54 aufweist. In eine Ausnehmung 54 des Elements 52 können Verriegelungszapfen bzw. -nasen 56a und 56b eingreifen. Dieser Eingriff erfolgt vorzugsweise formschlüssig.

In der Fig. 4 sind lediglich das Verriegelungselement 52 und die Verriegelungszapfen 56 dargestellt. Die Verriegelungszapfen 56 sind analog zu der Darstellung in Fig. 1 - 3 mit Schließbacken (nicht dargestellt) verbunden, die wiederum mit Sattelbacken (nicht dargestellt) verbunden sind. Die Ausnehmung 54 weist gegenüber der Mittelachse 51 abgeschrägte Flächen 58a und 58b auf, die mit Flächen 60a und 60b der Verriegelungszapfen 56a und 56b zusammenwirken und diese insbesondere führen.

Ein Abstand d zwischen den Verriegelungszapfen 56 bzw. die effektive Breite B_{eff} der Ausnehmung 54 des Verriegelungselements 52 bestimmt das Ausmaß, wie weit die Schließbacken geöffnet sind und somit den möglichen Durchmesser des Königszapfens, der gehalten werden kann.

In der Fig. 4 berühren sich die Zapfen 56a und 56b nicht. Ein nicht dargestellter Königszapfen ist in eine Ausnehmung der Schließbacken analog zur Ausnehmung 24 der Fig. 1 - 3 formschlüssig eingeführt. Die hier dargestellte Stellung der Zapfen 56 entspricht der Riegelstellung. Der Durchmesser des Königszapfen ist (noch) so groß, dass die hier nicht dargestellten Schließbacken nicht vollständig verschließbar sind. Mit zunehmendem Verschleiß nimmt der Durchmesser des Königzapfens jedoch ab, so dass die Riegelstellung nachgestellt werden muss, um den Königszapfen weiterhin formschlüssig zu halten.

Bei geringerem Durchmesser des Königszapfens gegenüber der aktuellen Einstellung wird der Abstand d zwischen den Zapfen 56 bzw. die effektive Breite B_{eff} der Ausnehmung 54 verringert, d.h. es wird nachgestellt. Dabei wird z.B. das Verriegelungselement 52 von einem verbundenen Hubzylinder 22 (vgl. gestrichelte Linie in Fig. 4) in Richtung eines Pfeils 60 verfahren.

Das Nachstellen kann von Hand, servomotorisch, hydraulisch oder ähnlich erfolgen. Dieser Vorgang kann auch automatisch vorgenommen werden, wobei eine Messvorrichtung vorgesehen sein kann, die den Durchmesser oder das Spiel des Königszapfens erfasst, damit entschieden werden kann, ob nachgestellt werden muss oder nicht.

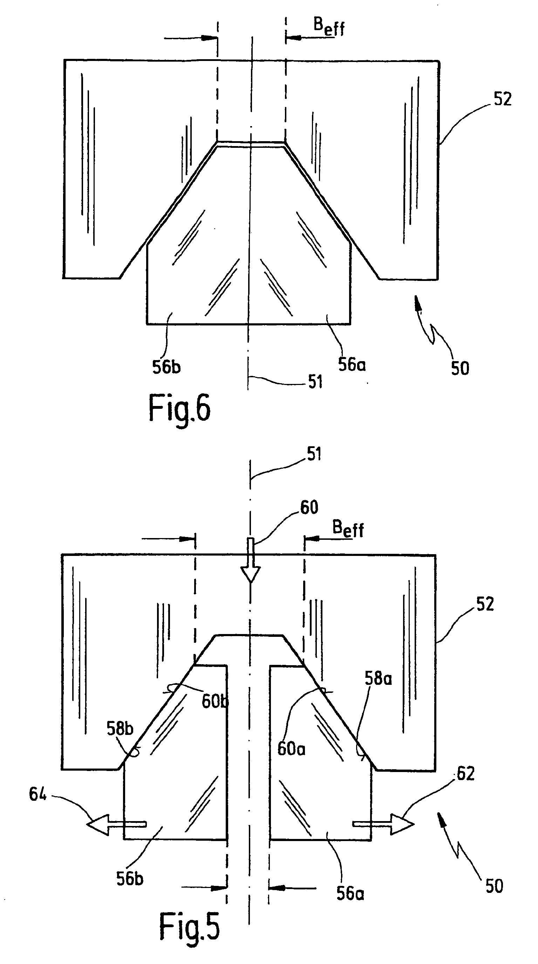

Die Ausnehmung 54 des Verriegelungselements 52 ist so ausgebildet, dass sich die Verriegelungszapfen 56 in den in den Fig. 5 und 6 dargestellten geschlossenen Stellungen nicht quer zur Mittelachse 51 bewegen können. Die Verriegelungszapfen 56 sind so arretiert, dass sich die mit ihnen verbundenen Schließbacken nicht öffnen lassen, wodurch der Königszapfen gehalten wird.

In der Fig. 5 ist eine zweite geschlossene Stellung der Verriegelungsvorrichtung 50 gezeigt, wobei bereits nachgestellt wurde.

Dazu wurde hier das Verriegelungselement 52 im Vergleich zur Fig. 4 entlang der Mittelachse 51 bewegt, wie es durch einen Pfeil 60 angedeutet ist. Durch die Bewegung des Verriegelungselements 52 wird es den Verriegelungszapfen 56 ermöglicht, sich entgegen der Richtung der Pfeile 62 und 64, d.h. in einer Richtung quer zur Mittelachse 51, zu bewegen. Die Pfeile 62 und 64 stellen hier die Öffnungsrichtung der (hier nicht vollständig dargestellten) Sattelkupplung dar.

Bewegt man das Verriegelungselement 52 in Richtung des Pfeils 60, so verringert sich die effektive Breite B_{eff} der Ausnehmung 54, die in den Fig. 4 - 6 durch zwei beabstandete, vertikal gestrichelte Linien dargestellt ist. Die Verriegelungszapfen 56 lassen sich somit in eine weitere, geschlossene Stellung verfahren. Dies ist eine geschlossene Stellung, da sich die Verriegelungszapfen 56 nicht weiter in Richtung der Pfeile 62 und 64 verfahren lassen. Die schrägen Flächen 60 der Verriegelungszapfen 56 halten die schrägen Flächen 58 des Verriegelungselements 52. Eine Bewegung der Zapfen 56 ist nicht möglich, da diese fest mit der jeweils entsprechenden Schließbacke 18 verbunden sind, so dass sie einerseits vom Königszapfen und andererseits vom Verrieglungselement 52 in der Riegelstellung gehalten werden.

Es ist ferner möglich, das Verriegelungselement 52 noch weiter in Richtung des Pfeils 60 zu verfahren, um einen Königszapfen mit einem noch kleineren Durchmesser in die für ihn vorgesehene Ausnehmung (vgl. Pos. 24 in Fig. 1) zwischen den Schließbacken 18 einzuführen. Das Verriegelungselement 52 wird in Richtung des Pfeils 60 zurückgefahren, bis das Verriegelungselement 52 die Verriegelungszapfen 56, vorzugsweise formschlüssig, derart umfasst, dass sich die Verriegelungszapfen 56 nicht mehr in Öffnungsrichtung verfahren lassen.

Unter Zug, d.h. wenn die Sattelzugmaschine über den Königszapfen den Sattelanhänger zieht - im Beispiel der Fig. 4 bis 6 bedeutete dies, dass sich die Verriegelungsvorrichtung 50 in der Zeichenebene nach oben bewegt -, übt der Königszapfen in den Zeichenebenen der Fig. 4 bis 6 eine Kraft nach unten aus. Diese Kraft bewirkt, dass ein Druck auf die Schließbacken 18 wirkt, der die Schließbacken 18 dazu veranlasst, sich auseinander zu bewegen. Diesem Druck, und somit auch der Kraft, wirkt das Verriegelungselement 52 entgegen und hält die Schließbacken 18 über die Verriegelungszapfen 56 somit in einer geschlossenen (Riegel-)Stellung.

In Fig. 6 ist eine vollständig geschlossene Stellung dargestellt. Gegenüber der Fig. 5 sind die Verriegelungszapfen 56 gegengesetzt zu den Pfeile 62 und 64 verfahren worden. Die Zapfen 56 berühren sich. Dies ist eine Stellung, bei der gerade noch ein Königszapfen benutzt werden kann. Verringert sich der Durchmesser des Königszapfens auf Grund von Verschleiß weiter, so können die Schließbacken nicht noch weiter zusammengefahren werden, um das resultierende Spiel auszugleichen. Dann sollte der Königszapfen ausgetauscht werden.

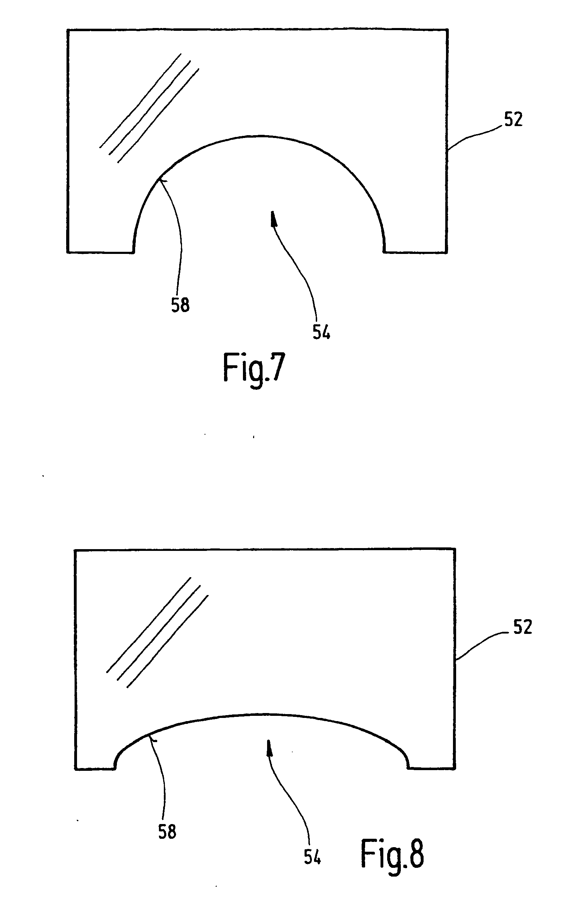

Die Ausnehmung 54 der Fig. 4 bis 6 ist annähernd V-förmig ausgebildet. Es sind jedoch auch andere Formen für die Ausnehmung 54 möglich. Die Ausnehmung 54 könnte z.B. auch kreis- oder ellipsenförmig ausgestaltet sein (vgl. Fig. 7 und 8).

Wenn die Ausnehmung 54 wie in den Fig. 4 bis 6 V-ähnlich ausgestaltet ist, ist es bevorzugt, die Verriegelungszapfen 56 so auszubilden, dass diese ebenfalls schräge Flächen 60a und 60b aufweisen, die formschlüssig mit den Flächen 58a und 58b der Ausnehmung 54 zusammenwirken. Es sind auch andere Formen, z.B. runde, für den Querschnitt der Verriegelungszapfen 56 denkbar. Außerdem können an den Verriegelungszapfen Rollen (nicht dargestellt) angebracht sein, um die Reibung zwischen Verriegelungselement und Verriegelungszapfen beim Nachstellen zu verringern.

Die Fläche 58 der Ausnehmung 54 des Verriegelungselements 52 sollte jedoch gegenüber der Öffnungsrichtung schräg orientiert sein, so dass die Verriegelungszapfen eine Gegenkraft erfahren, falls versucht werden sollte, die Verriegelungszapfen in eine geöffnete Stellung zu bringen.

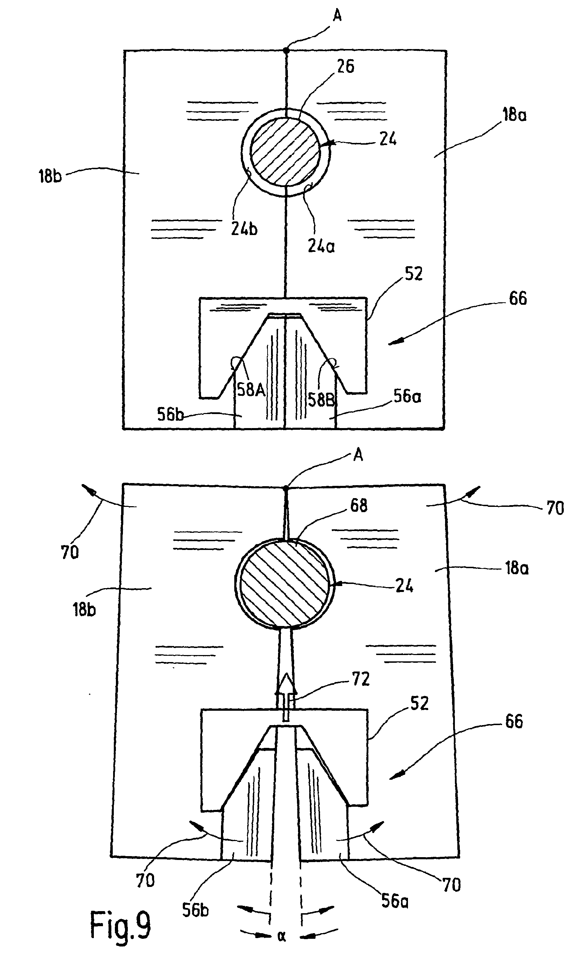

Bei der Verriegelungsvorrichtung gemäß den Fig. 4 - 6 führen die Verriegelungszapfen 56 eine geradlinige Bewegung aus. Jedoch können die Schließbacken auch drehbar gelagert sein, so dass sie eine Bewegung auf einer Kreisbahn ausführen. Diesem Umstand ist durch eine weitere Ausführungsform der Verriegelungsvorrichtung gemäß der Erfindung in der Fig. 9 Rechnung getragen.

Man erkennt in der Fig. 9 eine Verriegelungsvorrichtung 66, die ebenfalls ein Verriegelungselement 52 aufweist. Das Verriegelungselement 52 kann gegenüber den Schließbacken 18 bewegt werden (vgl. Pfeil 72). Die Verriegelungszapfen 56A und 56B sind jeweils fest mit einer der Schließbacken 18 verbunden.

In der oberen Hälfte der Fig. 9 sind die Schließbacken 18 und das Verriegelungselement 52 in einer vollständig geschlossenen Stellung dargestellt. Die Schließbacken 18 umgeben einen Königszapfen 26, der einen Durchmesser aufweist, der geringer als der Durchmesser der Ausnehmungen 24 in den Schließbacken 18 ist. Der Abstand zwischen dem Königszapfen 26 und den Schließbacken 18 entspricht hier dem Spiel zwischen diesen. Solch ein Königszapfen 26 wäre gegen einen neuen mit einem größeren Durchmesser auszutauschen.

In der unteren Hälfte der Fig. 9 ist ein Königszapfen 68 dargestellt, der einen größeren Durchmesser als die Ausnehmung 24 in den Schließbacken 18 aufweist. Um diesen Königszapfen 68 umschließen zu können, müssen die Schließbacken 18 um einen Winkel α geöffnet werden. Die Öffnungsrichtung ist durch Pfeile 70 veranschaulicht. Die Schließbacken 18, und somit auch die Verriegelungszapfen 56, bewegen sich um einen Drehpunkt A auf einer Kreisbahn. Um die Schließbacken 18 um den Winkel α öffnen zu können, wird das Verriegelungselement 52 in der Fig. 9 entlang des Pfeils 72 nach oben verfahren. Die Verriegelungszapfen 56 berühren das Verriegelungselement 52 hier nicht mehr flächig, sondern jeweils nur noch in einem einzigen Punkt bzw. einer Linie. Formen für die Verriegelungszapfen, bei denen eine flächenhafte Berührung stattfindet, sind ebenfalls denkbar.

Sollte der Durchmesser des Königszapfens 68 durch Abnutzung kleiner werden, so kann das Verriegelungselement 52 entgegen der Richtung des Pfeils 72 bewegt werden, um die Verriegelungszapfen 56 enger zusammenzubringen. Dieses Nachstellen kann automatisiert erfolgen.

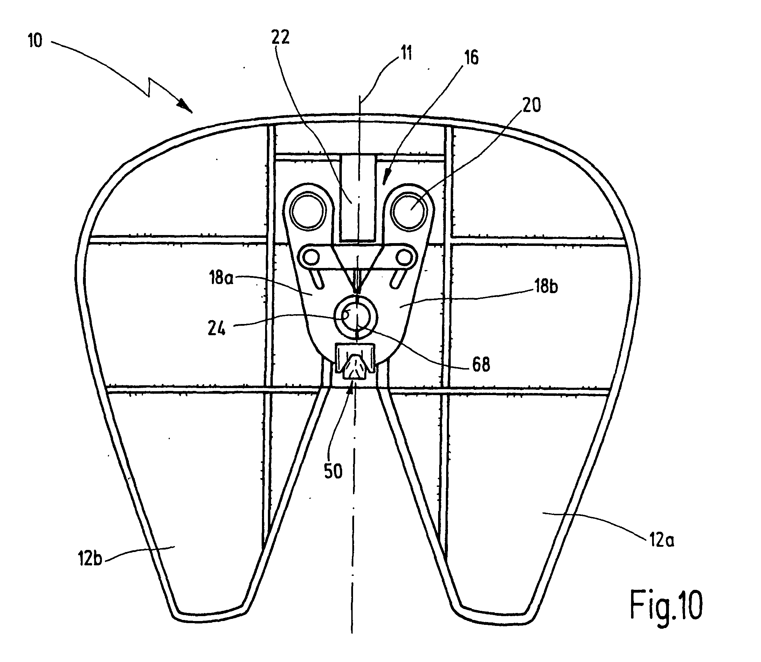

Fig. 10 zeigt eine Sattelkupplung, die eine Verriegelungsvorrichtung aufweist, wie sie im Zusammenhang mit den Fig. 4 bis 9 beschrieben wurde.

## Patentansprüche

1. Sattelkupplung mit zwei Schließbacken (18a, 18b), die in einer geschlossenen Stellung eine Ausnehmung (24) zum Aufnehmen eines Königszapfens (26; 68) bilden und die mit ersten Führungsflächen (60a, 60b) versehen sind, und mit einer Verriegelungsvorrichtung (36; 50; 66) zum Zusammenhalten der Schließbacken (18a, 18b) in mehreren geschlossenen Stellungen, in denen diese im Bereich der Ausnehmung (24) jeweils unterschiedlich beabstandet sind, wobei die Verriegelungsvorrichtung (50; 66) mindestens ein Verriegelungselement (52) aufweist, das mit zweiten Führungsflächen (58a, 58b) versehen ist, die an den ersten Führungsflächen (60a, 60b) anliegen und mit diesen zusammen ein Kurvengetriebe bilden, derart, dass die Verriegelungsvorrichtung (50; 66) ein kontinuierliches Einstellen des Abstandes im Bereich der Ausnehmung (24) ermöglicht, wobei ferner das Verriegelungselement (52) linear verfahrbar ist und die zweiten Führungsflächen (58a, 58b) im Wesentlichen U-förmig oder V-förmig an dem Verriegelungselement (52) ausgebildet sind, **dadurch gekennzeichnet, dass** die Verriegelungsvorrichtung (50; 66) den Abstand im Bereich der Ausnehmung (24) selbsttätig so einstellt, dass der jeweils aufgenommene Königszapfen (26; 68) spielfrei in der Ausnehmung (24) gehalten wird, dass das Verriegelungselement (52) hydraulisch verstellbar ist, dass die ersten Führungsflächen (60a, 60b) an Verriegelungsnasen (56a, 56b) vorgesehen sind, die sich an freien Enden der Schließbacken (18a, 18b) befinden, dass die ersten Führungsflächen (60a, 60b) zu einer Mittelachse (51) der Sattelkupplung (10) geneigt sind, und dass ein Hydraulikzylinder (22) das Verriegelungselement (52) mit den eine im Wesentlichen V-förmige Ausnehmung bildenden zweiten Führungsflächen (58a, 58b) von der den freien Enden abgewandten Seite her auf die Verriegelungsnasen (56a, 56b) zu (60) bzw. von diesen weg bewegt.

2. Sattelkupplung nach Anspruch 1, **dadurch gekennzeichnet, dass** das Verriegelungselement (52) einstückig ausgebildet ist.

3. Sattelkupplung nach Anspruch 1 oder 2, **dadurch gekennzeichnet, dass** die ersten Führungsflächen (58a, 58b) einstückig an die Schließbacken (18a, 18b) angeformt sind.

4. Sattelkupplung nach einem oder mehreren der Ansprüche 1 bis 3, **dadurch gekennzeichnet, dass** das Kurvengetriebe ein Keilgetriebe mit geraden Führungsflächen (58a, 58b, 60a, 60b) ist.

5. Sattelkupplung nach einem oder mehreren der Ansprüche 1 bis 4, **dadurch gekennzeichnet, dass** das Kurvengetriebe ein Keilgetriebe mit runden Führungsflächen (58a, 58b, 60a, 60b) ist.

6. Sattelkupplung nach Anspruch 5, **dadurch gekennzeichnet, dass** das Verriegelungselement (52) eine kreisförmige oder elliptische Ausnehmung (54) aufweist.

7. Sattelkupplung nach einem oder mehreren der Ansprüche 1 bis 6, **dadurch gekennzeichnet, dass** das Kurvengetriebe Rollen aufweist.

8. Sattelkupplung nach einem oder mehreren der Ansprüche 1 bis 7, **dadurch gekennzeichnet, dass** die Schließbacken (18a, 18b) um eine Achse (A) verschwenkbar sind.

9. Sattelkupplung nach einem oder mehreren der Ansprüche 1 bis 8, **dadurch gekennzeichnet, dass** die Schließbacken (18a, 18b) linear verfahrbar sind.

## Claims

1. A fifth wheel coupling comprising two closing jaws (18a, 18b) which, in a closed position, configure a recess (24) for receiving a king pin (26; 68) and which are provided with first guide surfaces (60a, 60b), and a latch mechanism (36; 50; 66) for holding the closing jaws (18a, 18b) together in various closed positions in which they are at a different distance in the area of the recess (24), wherein the latch mechanism (50; 66) is provided with at least one latch element (52) having second guide surfaces (58a, 58b) engaging the first guide surfaces (60a, 60b) and, together with the latter, configure a cam drive such that the latch mechanism (50; 66) enables a continuous setting of the distance in the area of the recess (24) , wherein, further, the latch element (52) is adapted to be displaced linearly and the second guide surfaces (58a, 58b) are configured on the latch element (52) essentially U-shaped or V-shaped, **characterized in that** the latch assembly (50; 66) automatically sets the distance in the area of the recess (24) such that a given king pin (26; 68) received therein is held without play within the recess (24), that the latch element (52) is adapted to be moved hydraulically, that the first guide surfaces (60a, 60b) are provided on latch noses (56a, 56b) provided at free ends of the closing jaws (18a, 18b), that the first guide surfaces (60a, 60b) are inclined relative to a central axis (51) of the fifth wheel coupling (10), and that a hydraulic cylinder (22) moves the latch element (52) together with the second guide surfaces (58a, 58b) configuring an essentially V-shaped recess from the side opposite the free ends towards (60) the latch noses (56a, 56b) or away therefrom, resp..

2. The fifth wheel coupling of claim 1, **characterized in that** the latch element (52) is configured integrally.

3. The fifth wheel coupling of claim 1 or 2, **characterized in that** the first guide surfaces (58a, 58b) are configured integral with the closing jaws (18a, 18b).

4. The fifth wheel coupling of one or more of claims 1 to 3, **characterized in that** the cam drive is a wedge drive having straight guide surfaces (58a, 58b, 60a, 60b).

5. The fifth wheel coupling of one or more of claims 1 to 4, **characterized in that** the the cam drive is a wedge drive having curved guide surfaces (58a, 58b, 60a, 60b).

6. The fifth wheel coupling of claim 5, **characterized in that** the latch element (52) has a circular or an elliptic recess (54).

7. The fifth wheel coupling of one or more of claims 1 to 6, **characterized in that** the the cam drive is provided with rollers.

8. The fifth wheel coupling of one or more of claims 1 to 7, **characterized in that** the closing jaws (18a, 18b) are adapted to be pivoted about an axis (A).

9. The fifth wheel coupling of one or more of claims 1 to 8, **characterized in that** the closing jaws (18a, 18b) are adapted to be displaced linearly.

## Revendications

1. Sellette d'attelage avec deux mâchoires de serrage (18a, 18b) qui, dans une position fermée, forment un creux (24) pour le logement d'un pivot central (26 ; 68) et qui sont munies de premières surfaces de guidage (60a, 60b), et avec un dispositif de verrouillage (36 ; 50 ; 66) pour maintenir les mâchoires de serrage (18a, 18b) dans plusieurs positions fermées dans lesquelles celles-ci sont espacées chacune différemment dans la zone du creux (24), le dispositif de verrouillage (50 ; 66) comportant au moins un élément de verrouillage (52) qui est muni de deuxièmes surfaces de guidage (58a, 58b) qui s'appuient sur les premières surfaces de guidage (60a, 60b) et qui forment avec celles-ci une commande à cames de manière à ce que le dispositif de verrouillage (50 ; 66) permette un réglage continu de l'espacement dans la zone du creux (24), l'élément de verrouillage (52) étant, en outre, déplaçable linéairement et les deuxièmes surfaces de guidage (58a, 58b) étant formées sensiblement en forme de U ou de V sur l'élément de verrouillage (52), **caractérisée en ce que** le dispositif de verrouillage (50 ; 66) règle automatiquement l'espacement dans la zone du creux (24) de manière à ce que le pivot central (26 ; 68) respectivement logé dedans soit maintenu sans jeu dans le creux (24), **en ce que** l'élément de verrouillage ( 52) soit réglable hydrauliquement, **en ce que** les premières surfaces de guidage (60a, 60b) soient prévues sur des taquets de verrouillage (56a, 56b) qui se trouvent aux extrémités libres des mâchoires de serrage (18a, 18b), **en ce que** les premières surfaces de guidage (60a, 60b) sont inclinées en direction d'un axe médian (51) de la sellette d'attelage (10) et **en ce qu'**un vérin hydraulique (22) déplace l'élément de verrouillage (52) avec les deuxièmes surfaces de guidage (58a, 58b) formant un creux sensiblement en forme de V à partir du côté opposé aux extrémités libres vers (60) les taquets de verrouillage (56a, 56b) ou l'éloigne de ceux-ci.

2. Sellette d'attelage selon la revendication 1, **caractérisée en ce que** l'élément de verrouillage (52) est réalisé en une seule partie.

3. Sellette d'attelage selon la revendication 1 ou 2, **caractérisée en ce que** les premières surfaces de guidage (58a, 58b) sont formées en une seule partie sur les mâchoires de serrage (18a, 18b).

4. Sellette d'attelage selon une ou plusieurs des revendications 1 à 3, **caractérisée en ce que** la commande à cames est une commande à clavette avec des surfaces de guidage droites (58a, 58b, 60a, 60b).

5. Sellette d'attelage selon une ou plusieurs des revendications 1 à 4, **caractérisée en ce que** la commande à cames est une commande à clavette avec des surfaces de guidage rondes (58a, 58b, 60a, 60b).

6. Sellette d'attelage selon la revendication 5, **caractérisée en ce que** l'élément de verrouillage (52) comporte un creux circulaire ou elliptique (54).

7. Sellette d'attelage selon une ou plusieurs des revendications 1 à 6, **caractérisée en ce que** la commande à cames comporte des galets.

8. Sellette d'attelage selon une ou plusieurs des revendications 1 à 7, **caractérisée en ce que** les mâchoires de serrage (18a, 18b) peuvent pivoter autour d'un axe (A).

9. Sellette d'attelage selon une ou plusieurs des revendications 1 à 8, **caractérisée en ce que** les mâchoires de serrage (18a, 18b) sont déplaçables linéairement.
